# EUROPÄISCHE PATENTSCHRIFT

(11) **EP 2 870 402 B1**
(45) Veröffentlichungstag und Bekanntmachung des Hinweises auf die Patenterteilung: **08.02.2017**
(21) Anmeldenummer: 13770401.1
(22) Anmeldetag: 02.07.2013
(51) Int. Cl.: F16M 11/14, F16M 11/18, G03B 17/56, G03B 35/08, F16M 11/12

(54) **VORRICHTUNG ZUR STABILEN UND SPIELFREIEN VERSTELLUNG EINER KAMERA-HALTEVORRICHTUNG UM MINDESTENS EINE KIPPACHSE**
DEVICE FOR THE STABLE AND ZERO BACKLASH ADJUSTMENT OF A CAMERA-HOLDING DEVICE AROUND AT LEAST ONE TILTING AXIS
DISPOSITIF DE DÉPLACEMENT STABLE ET SANS JEU D'UN DISPOSITIF DE SUPPORT POUR CAMÉRA AUTOUR D'AU MOINS UN AXE DE BASCULEMENT

(30) Priorität: 07.07.2012 DE 202012006646 U
(43) Veröffentlichungstag der Anmeldung: 13.05.2015
(73) Patentinhaber: Maier, Florian, 82205 Gilching (DE)
(72) Erfinder: Maier, Florian, 82205 Gilching (DE)
(86) Internationale Anmeldenummer: PCT/DE2013/000353
(87) Internationale Veröffentlichungsnummer: WO 2014/008879

(56) Entgegenhaltungen:
- EP-A1- 0 113 851
- WO-A1-2009/100727
- GB-A- 274 272
- GB-A- 1 330 491
- US-A- 3 503 316
- US-A- 4 763 151

## Beschreibung

Die Erfindung betrifft eine Vorrichtung zur stabilen und spielfreien Verstellung einer Kamera-Haltevorrichtung um mindestens eine Kippachse, insbesondere an einer Vorrichtung für mehrkanalige Bildaufnahme, wobei die Verstellvorrichtung zwei miteinander kippbar verbundene Platten aufweist, und wobei die obere Platte als Kameratragplatte die Kamera zumindest indirekt trägt und mit der als Basisplatte fungierenden unteren Platte verbunden ist.

### Stand der Technik:

Zur Aufnahme von plastisch (= dreidimensional) wirkenden Bildern, die mit mehrkanaligen Bilddarstellungstechniken gezeigt werden, sind mindestens zwei Ansichten von einem aufzunehmenden Objekt notwendig, wobei die Einzelbilder zu einem einzigen dreidimensional wirkenden Bild zusammengefügt werden.

Die Kameras für diese Aufnahme blicken entweder nebeneinander in die gleiche Richtung, jedoch mit leicht unterschiedlicher Perspektive (Parallaxe), oder sind auf zwei Kameraebenen platziert, die durch einen halbdurchlässigen Spiegel zu einer Ebene zusammengeführt werden (siehe beispielhafte Ausführung in WO 2011 / 029 426 A1). Weiterhin ist es auch möglich, mindestens zwei Kameras auf mindestens zwei Ebenen anzuordnen (siehe beispielhafte Ausführung in DE 10 2005 042 413). Die resultierenden Kamerablickwinkel blicken dabei ebenfalls in die gleiche Richtung und die Aufnahmen werden aus leicht unterschiedlichen Perspektiven getätigt. Da sich je nach Montage der Kameras oder deren Objektive und je nach Brennweite die Lage der optischen Achsen der verwendeten Objektive zueinander ändert, sollten zur Vermeidung von sogenannten Offsets oder vertikalen Parallaxen oder anderweitig fehlkalibrierten Bildern die Kameralage(n), insbesondere nach jedem Brennweitenwechsel, nachjustiert werden.

Eine Verstelleinrichtung ist beispielsweise in WO2009/100727A gezeigt.

### Problem und Aufgabe:

Derzeit werden Kameras, insbesondere für eine mehrkanalige Bildaufnahme, meist durch eine Kippvorrichtung zueinander justiert, bei der zumindest für eine der Kameras zwei Träger-Platten miteinander zu einer Art Wippe verbunden sind und bei denen die gegenseitige Kippeinstellung durch ein Schraubgewinde, ein an der einen Platte befestigtes Lager und eine an der anderen Platte befestigte Mutter erfolgt, das die Distanz zwischen den beiden zur Wippe verbundenen Platten einstellt. Dadurch wird eine auf der Wippe befestigte Kamera um einen Winkel vertikal verstellt.

Selbst bei Verwendung eines Feingewindes muss so viel Spiel in der Lagerung und zwischen Schraubgewinde und Mutter bestehen, dass sich das Schraubgewinde problemlos drehen kann. Dies macht die Kalibrierung jedoch sehr ungenau, da das vorgenannte Spiel dazu führt, dass die Wippe nicht von selbst stabil feststeht. Daher muss die Wippe in der jeweiligen Position durch einen zusätzlichen Haltemechanismus (z.B. Plättchen mit Langloch und Feststellschraube) festgeklemmt werden. Dies wiederum löst zwar das Problem der Stabilität, führt aber zu zwei weiteren Problemen. Zum einen wird beim Feststellen durch das Anziehen der Feststellschraube die Winkeleinstellung mehr oder weniger verfälscht oder gar dejustiert und zum anderen macht die Feststellschraube ein unmittelbares motorisches Verstellen des Winkels an der Kippvorrichtung unmöglich. Bei einem motorischen Nachjustieren müsste nämlich die Feststellschraube erst manuell wieder gelöst werden oder sehr aufwändig motorisch geöffnet werden, um dann die Möglichkeit zu haben, die Kippvorrichtung nachzujustieren.

Die Aufgabe der Erfindung ist es, den beschriebenen Mangel zu beseitigen und eine Lösungsmöglichkeit zur stabilen und spielfreien Verstellung einer Kamera-Haltevorrichtung um mindestens eine Kippachse, insbesondere an einer Vorrichtung für mehrkanalige Bildaufnahme aufzuzeigen.

### Problemlösung:

Zur Lösung der genannten Aufgaben sieht die Erfindung Vorrichtungen mit den Merkmalen des Anspruchs 1 oder 8 vor. Vorteilhafte Ausgestaltungen sind Inhalt der jeweiligen Unteransprüche.

Bei einer ersten Ausgestaltung der erfindungsgemäßen Vorrichtung ist ein Gelenk (z.B. Pendellager oder Kugelgelenk) eingebaut, das die Kameratragplatte bezüglich der Basisplatte um einen in der Höhe feststehenden Drehpunkt kippen lässt und diese beiden Platten miteinander verbindet. Um das Kippen der Kameratragplatte in bestimmte Richtungen und in bestimmten Winkeln gezielt zu ermöglichen - z.B. nach vorne in x-Richtung (tilt) und im 90° Winkel dazu in z-Richtung (roll) - muss die Kameratragplatte beim Kippen exakt geführt werden. Hierzu sind (pro Kipprichtung) an der Kameratragplatte zwei zueinander beabstandete Führungsstifte angeordnet, wovon einer auf der einen Seite des Kugelgelenks und einer auf der anderen Seite des Gelenks angeordnet ist.

Auf der Basisplatte ist ein senkrecht zur Kippachse verschiebbarer Rampenschlitten mit zwei entgegengesetzt geneigten Lauframpen angeordnet. Dieser Rampenschlitten kann an der Basisplatte mit einer Führung (beispielsweise einem Schwalbenschwanz oder einer kugelgelagerten Führung) gleitend befestigt sein. Die beiden Lauframpen sind mit dem Rampenschlitten starr verbunden. Die Lauframpen können als ebene schräge Flächen ausgebildet sein oder jeweils eine gekrümmte Fläche sein, die in Verschiebungsrichtung durch eine Kurve, insbesondere durch einen Kreisbogen um den Gelenkdrehpunkt gebildet werden. Vorzugsweise befindet sich das Gelenk mittig zwischen beiden Lauframpen. Die Anschrägungen der Lauframpen sind in diesem Fall spiegelsymmetrisch zueinander oder voneinander geneigt ausgeführt.

In einer Variante der ersten Ausgestaltung können unterschiedliche Abstände der Lauframpen vom Gelenkdrehpunkt durch unterschiedliche Steigungen der Rampen kompensiert werden. Auch hier können die Rampen entweder zueinander oder voneinander geneigt ausgeführt und entsprechend gekrümmt sein. Eine dritte Variante der ersten Ausgestaltung lässt die Führungsstifte mit einer Rolle ausgestattet auf den Lauframpen oder in anders gestalteten Führungen gleiten.

Bei den Varianten 1 bis 3 dieser ersten Ausgestaltung wird bei einer Verschiebung des Rampenschlittens einer dieser Führungsstifte von der einen angeschrägten Lauframpe nach oben gedrückt und gleichzeitig wandert auf der anderen Seite der andere dieser Führungsstifte auf der entgegengesetzt angeschrägten Lauframpe nach unten, so dass eine Verschiebung des Rampenschlittens die Kameratragplatte in einen definierten Kippwinkel zur Basisplatte spielfrei einnimmt.

Um die Vorrichtung spielfrei zu halten oder etwaiges Spiel durch Abnutzung zu verlieren, können beide Führungsstifte im Abstand von der Platte in ihrer Länge nachgestellt werden, vorzugsweise durch ein feines Schraubgewinde, das wiederum gegen versehentliches Lockern gesichert ist.

Der Rampenschlitten kann z.B. durch eine Gewindespindel, einen elektrischen oder magnetischen Motor oder durch Druck gegen eine Feder vor und zurück bewegt werden. Wenn sich also die eine Lauframpe nach hinten bewegt, so presst sie den vorderen Führungsstift und damit die Kameratragplatte durch die schiefe Ebene nach oben und gibt durch das Zurückweichen der hinteren schrägen Lauframpe dem hinteren Führungsstift den Weg für eine Abwärtsbewegung frei. Durch das Gelenk wird die Kameratragplatte an der Basisplatte festgehalten und somit der hintere Führungsstift auf die Lauframpe gedrückt. Durch diesen Mechanismus kann die Kameratragplatte sehr exakt gegen die Basisplatte geneigt werden.
An dem die Lauframpe berührenden Ende des Führungsstiftes ist zum besseren Gleiten vorzugsweise eine Kugel oder ein Rolle gelagert. Um der vorzugsweisen Kugel in der Lauframpe einen stabileren Lauf zu geben, kann in der Lauframpe entweder eine Rille oder Nut, insbesondere eine V-förmige Kerbe eingebracht, insbesondere eingefräst, sein. Eine V-förmige Kerbe hat den Vorteil, dass die Kugel an beiden Flächen der V-förmigen Kerbe links und rechts gleichzeitig geführt wird und damit der Kugel einen stabilen Halt gibt.

Bei einer zweiten Ausgestaltung der erfindungsgemäßen Vorrichtung ist nur ein Führungsstift auf einer Seite des Gelenks vorhanden, dessen Rolle in einer Kulissenführung der Lauframpe läuft. Auch hier ist der Führungsstift in seiner Länge fein justierbar und kann eine sichernde Feststellmöglichkeit aufweisen. Vorzugsweise weist auch hier der Führungsstift an seiner Spitze eine Laufkugel auf, die hier nun in der Kulissenführung geführt wird.
Mit jeder der alternativen Vorrichtungen kann eine Kipprichtung abgedeckt werden. Weitere Kipprichtungen, z.B. zur Seite können durch weitere, überlagerte ähnliche Vorrichtungen erzielt werden. Durch z.B. zwei zueinander senkrecht angeordnete Verstellvorrichtungen kann die exakte Positionierung in x-Richtung (tilt) und 90° dazu in y-Richtung (roll) erfolgen. Hierbei kann ein einziges Gelenk für beide Verstellvorrichtungen gemeinsam fungieren, wenn es im Schnittpunkt der beiden senkrecht zueinander stehenden Kippwinkel angeordnet ist. Insbesondere in diesem Fall ist das Gelenk vorzugsweise als Pendellager ausgebildet.
Diese Verstellvorrichtung lässt sich auch für Apparaturen anwenden, bei denen beispielsweise mehrere zueinander ausgerichtete Kameras auf einer Kameratragplatte angeordnet werden.

### Figurenbeschreibung:

**Figur 1** zeigt eine Ausführungsform der Vorrichtung in waagrechter Stellung.
**Figur 2** zeigt die Vorrichtung nach Figur 1 mit nach vorne gekippter Stellung.
**Figur 3** zeigt die Vorrichtung nach Figur 1 mit nach hinten gekippter Stellung.
**Figur 4** zeigt beispielhaft eine Überlagerung zweier senkrecht zueinander angeordneten Verstellvorrichtungen.
**Figur 5** zeigt eine Ausführung der Lauframpe mit V-förmiger Kerbe.
**Figur 6** zeigt eine weitere Ausführungsform der erfindungsgemäßen Vorrichtung mit nur einem Führungsstift.

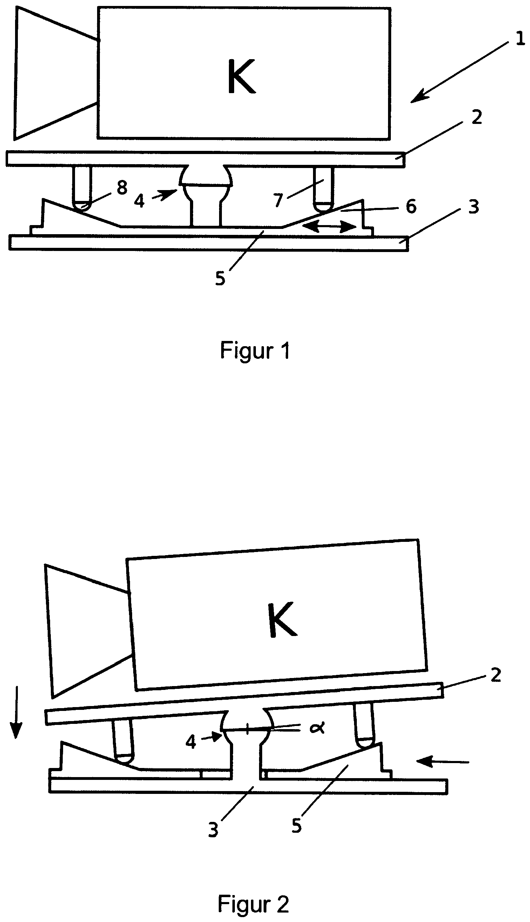

Beispielhaft ist in Figur 1 eine Verstellvorrichtung (1) mit einer auf einer Kameratragplatte (2) festgelegten Kamera (K) schematisch dargestellt. Die Verbindung zwischen Kameratragplatte und Kamera kann noch weitere zwischengelagerte Befestigungs- oder Verstellkomponenten ausweisen. Eine darunter angeordnete Basisplatte (3), die beispielsweise auf einem Stativ befestigt ist, ist über ein Gelenk (4), das einen höhenkonstanten Drehpunkt besitzt, mit der Kameratragplatte (2) verbunden. Auf der Basisplatte (3) ist ein in Pfeilrichtungen verschiebbarer Rampenschlitten (5) mit zwei entgegengesetzt geneigten Lauframpen (6) angeordnet, die hier beispielhaft als schräge ebenen Flächen ausgebildet sind. Die Kameratragplatte (2) weist symmetrisch zu beiden Seiten des Gelenks zwei zueinander beabstandete Führungsstifte (7) auf. An Ihren jeweiligen Spitzen ist eine Laufkugel (8) angebracht, die auf den Lauframpen geführt werden.

Figur 2 zeigt die Vorrichtung gemäß Figur 1 in einer nach vorne gekippten Stellung. Durch die Verstellung des Rampenschlittens nach vorne (siehe Pfeil nach bildlinks) kippt die Kameratragplatte um einen Winkel (α) um den Drehpunkt des Gelenks (4) nach unten (siehe Pfeil vorne nach unten).

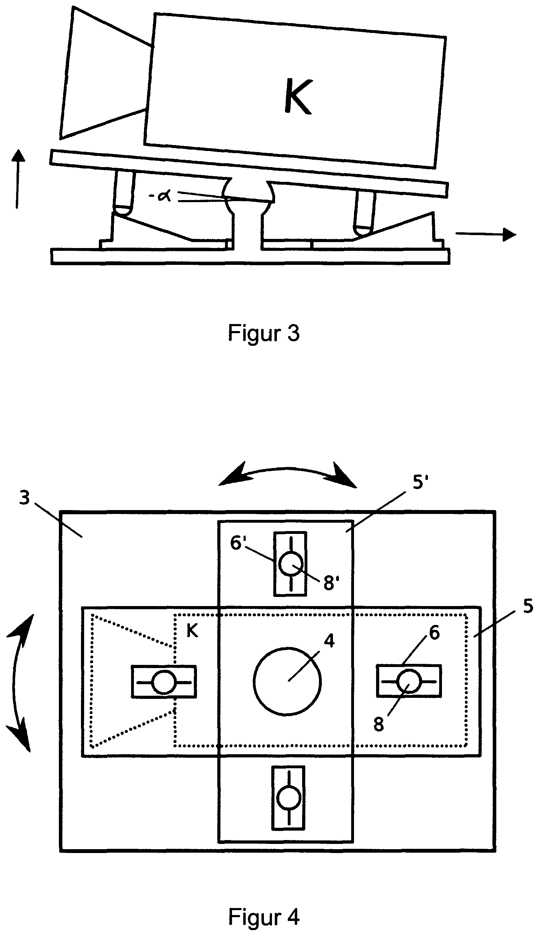

Figur 3 zeigt die Vorrichtung gemäß Figur 2 in einer nach hinten gekippten Stellung. Durch die Verstellung des Rampenschlittens (3) nach hinten (siehe Pfeil nach bildrechts) kippt die Kameratragplatte um einen Winkel (α) um den Drehpunkt des Gelenks (4) nach oben (siehe Pfeil vorne nach oben) Figur 4 zeigt die Vorrichtung gemäß Figur 1 bis 3 von oben, jedoch mit zwei zueinander senkrecht angeordneten Verstellvorrichtungen. Die Rampenschlitten (5) und (5') sind im 90° Winkel zueinander angeordnet, so dass eine exakte Positionierung der Kameratragplatte (2) in x-Richtung (tilt) und 90° dazu in y-Richtung (roll) erfolgen kann. Die Figur zeigt auch beispielhaft die Lage der Lauframpen (6) und (6').

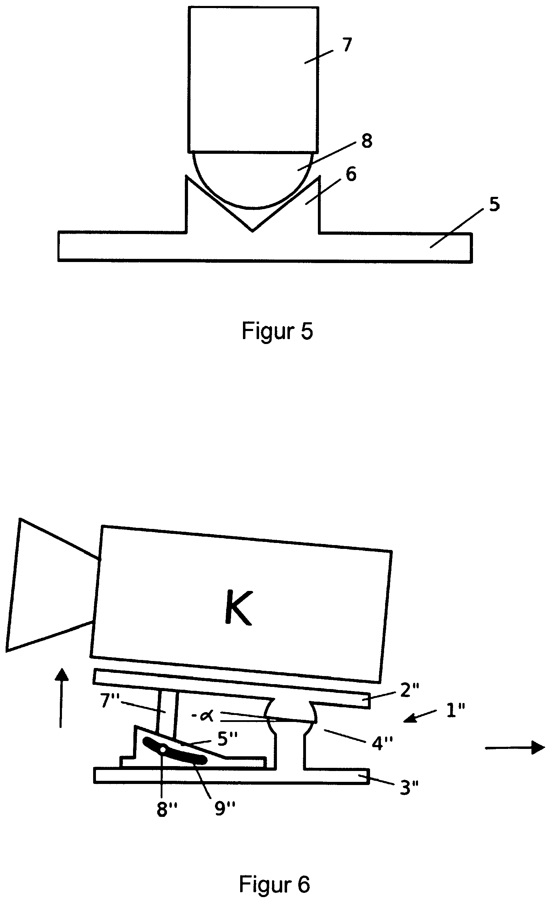

Figur 5 zeigt in einer zur Figur 1 senkrechten Schnitt-Darstellung beispielhaft einen Rampenschlitten (5) mit einer V-förmigen Kerbe, in der eine Laufkugel (8) an der Spitze eines Führungsstiftes (7) läuft.

In Figur 6 zeigt eine weitere Ausführungsform der erfindungsgemäßen Vorrichtung, die abweichend von der Ausführung nach Figur 1 nur einen Führungsstift (7") aufweist, in dessen Spitze eine Laufrolle (8") angeordnet ist, die ihrerseits in einer kulissenhaften Führung (9") in dem Rampenschlitten (5") geführt wird. Die Kulissenführung (9") ist hier leicht bogenförmig ausgebildet.

## Patentansprüche

1. Verstellvorrichtung zur stabilen und spielfreien Verstellung einer Kamera-Haltevorrichtung um mindestens eine Kippachse, insbesondere an einer Vorrichtung für mehrkanalige Bildaufnahme, wobei die Verstellvorrichtung (1) zwei miteinander kippbar verbundene Platten aufweist, und wobei die obere Platte als Kameratragplatte (2) eine Kamera (K) zumindest indirekt trägt und mit der als Basisplatte (3) fungierenden unteren Platte verbunden ist
**dadurch gekennzeichnet,**
**dass** auf der Basisplatte (3) ein senkrecht zur Kippachse verschiebbarer Rampenschlitten (5) mit zwei entgegengesetzt geneigten Lauframpen (6) angeordnet sind,
**dass** sich zwischen beiden Lauframpen (6) ein Gelenk (4) befindet, durch das die Kameratragplatte (2) mit der Basisplatte (3) um einen höhenkonstanten Drehpunkt verbunden ist,
**dass** die Kameratragplatte (2) zwei zueinander beabstandete Führungsstifte (7) aufweist, die auf den Lauframpen (6) geführt werden, wobei mindestens einer der Führungsstifte (7) im Abstand von der Kameratragplatte (2) in seiner Länge fein justierbar ist, um die Vorrichtung spielfrei zu halten, und
**dass** die Vorrichtung so ausgelegt ist, dass durch eine Verschiebung des Rampenschlittens (5) die Kameratragplatte (2) einen definierten Kippwinkel (α) zur Basisplatte (3) spielfrei einnimmt.

2. Vorrichtung nach Anspruch 1,
**dadurch gekennzeichnet, dass** mindestens einer der Führungsstifte (7) eine sichernde Feststellmöglichkeit aufweist.

3. Vorrichtung nach Anspruch 1 oder 2,
**dadurch gekennzeichnet, dass** die Führungsstifte (7) an ihrer jeweiligen Spitze eine Laufkugel (8) aufweisen, die auf den Lauframpen (6) geführt wird.

4. Vorrichtung nach Anspruch 3,
**dadurch gekennzeichnet, dass** in die Lauframpen (6) eine Rille, insbesondere eine V-förmige Kerbe, zur Führung der Laufkugeln (8) aufweisen.

5. Vorrichtung nach einem der Ansprüche 1 bis 4,
**dadurch gekennzeichnet, dass** die Vorrichtung aus zwei zueinander senkrecht angeordneten Verstellvorrichtungen (1) besteht.

6. Vorrichtung nach Anspruch 5,
**dadurch gekennzeichnet, dass** das Gelenk (4) derart im Schnittpunkt der beiden senkrecht zueinander stehenden Kippwinkel angeordnet ist, dass es für beide Verstellvorrichtungen (1) gemeinsam fungieren kann.

7. Vorrichtung nach Anspruch 6,
**dadurch gekennzeichnet, dass** das Gelenk (4) ein Pendellager ist.

8. Verstellvorrichtung zur stabilen und spielfreien Verstellung einer Kamera-Haltevorrichtung um mindestens eine Kippachse, insbesondere an einer Vorrichtung für mehrkanalige Bildaufnahme, wobei die Verstellvorrichtung (1") zwei miteinander kippbar verbundene Platten aufweist, und wobei die obere Platte als Kameratragplatte (2") eine Kamera (K) zumindest indirekt trägt und mit der als Basisplatte (3") fungierenden unteren Platte verbunden ist
**dadurch gekennzeichnet,**
**dass** auf der Basisplatte (3") ein senkrecht zur Kippachse verschiebbarer Rampenschlitten (5") angeordnet ist,
**dass** die Kameratragplatte (2") mit der Basisplatte (3") durch ein Gelenk (4") um einen höhenkonstanten Drehpunkt verbunden ist,
**dass** die Kameratragplatte (2") einen Führungsstift (7") aufweist, der in einer Kulissenführung (9") des Rampenschlittens (5") geführt (8") wird, wobei der Führungsstift (7") im Abstand von der Kameratragplatte (2) in seiner Länge fein justierbar ist, um die Vorrichtung spielfrei zu halten, und
**dass** die Vorrichtung so ausgelegt ist, dass durch eine Verschiebung des Rampenschlittens (5") die Kameratragplatte (2") einen definierten Kippwinkel (α) zur Basisplatte (3") spielfrei einnimmt.

9. Vorrichtung nach Anspruch 8,
**dadurch gekennzeichnet, dass** der Führungsstift (7") eine sichernde Feststellmöglichkeit aufweist.

10. Vorrichtung nach Anspruch 8 oder 9,
**dadurch gekennzeichnet, dass** der Führungsstift (7") an seiner Spitze eine Laufkugel (8") aufweist, die in der Kulissenführung (9") geführt wird.

11. Vorrichtung nach einem der Ansprüche 8 bis 10,
**dadurch gekennzeichnet, dass** die Vorrichtung aus zwei zueinander senkrecht angeordneten Verstellvorrichtungen (1") besteht.

12. Vorrichtung nach Anspruch 11,
**dadurch gekennzeichnet, dass** das Gelenk (4") derart im Schnittpunkt der beiden senkrecht zueinander stehenden Kippwinkel angeordnet ist, dass es für beide Verstellvorrichtungen (1") gemeinsam fungieren kann.

13. Vorrichtung nach Anspruch 12,
**dadurch gekennzeichnet, dass** das Gelenk (4") ein Pendellager ist.

## Claims

1. adjusting device for the stable and zero backlash adjustment of a camera-holding device around at least one tilting axis, in particular on a device for multi-channel image capture, wherein the adjustment device (1) comprises two plates joined to one another so as to be tiltable and wherein the upper plate as camera support plate (2) carries the camera (K) at least indirectly and is connected to the lower plate acting as the base plate (3)
**characterized by**
a ramp slide (5) being mounted on the base plate (3) where the ramp slide is vertically displaceable to the tilting axis and has two oppositely inclined running ramps (6),
a joint (4) being placed between the two running ramps (6) which joins the camera support plate (2) to the base plate (3) with a height consistent pivotal point,
the camera support plate (2) having two guide pins (7) spaced apart from one another which are guided on the running ramps (6) with at least one of the guide pins (7) being finely adjustable in its length at distance from the camera support plate (2) to keep the device with zero backlash, and
the device being designed in such a manner that by displacing the ramp slide (5) the camera support plate (2) assumes, with zero backlash, a defined tilting angle (α) with respect to the base plate (3).

2. Device according to claim 1,
**characterized by** at least one of the guide pins (7) having a securing locking option.

3. Device according to claim 1 or 2,
**characterized by** the guide pins (7) having a running ball (8) on their respective tips which is guided on the running ramps (6).

4. Device according to claim 3,
**characterized by** the running ramps (6) having a flute, particularly a V-shaped notch to guide the running balls (8).

5. Device according to claim 1 to 4,
**characterized by** the device consisting of two adjustment devices (1) which are vertically aligned to each other.

6. Device according to claim 5,
**characterized by** the joint (4) being placed at the intersection point of the two tilting angles positioned vertically to each other in a way which allows it to function for both adjustment devices (1) together.

7. Device according to claim 6,
**characterized by** the joint (4) being a tumbler bearing.

8. device for the stable and zero backlash adjustment of a camera-holding device around at least one tilting axis, in particular on a device for multi-channel image capture, wherein the adjustment device (1") comprises two plates joined to one another so as to be tiltable and wherein the upper plate as camera support plate (2") carries the camera (K) at least indirectly and is connected to the lower plate acting as the base plate (3")
**characterized by**
a ramp slide (5") being mounted on the base plate (3") which is displaceable vertically to the tilting axis,
the camera support plate (2") being joined with the base plate (3") via a joint (4") which has a height consistent pivotal point.
the camera support plate (2") having a guide pin (7") which is guided (8") in a sliding block (9") of the ramp slide (5") and where the guide pin (7") is finely adjustable in its length at distance from the camera support plate (2) to keep the device with zero backlash, and
the device being designed in such a manner that by displacing the ramp slide (5") the camera support plate (2") assumes, with zero backlash, a defined tilting angle (α) with respect to the base plate (3").

9. Device according to claim 8,
**characterized by** the guide pin (7") having a securing locking option.

10. Device according to claim 8 or 9,
**characterized by** the guide pin (7") having a running ball (8") on its tip which is guided in the sliding block (9").

11. Device according to claim 8 to 10,
**characterized by,** the device consisting of two adjustment devices (1") which are vertically aligned to each other.

12. Device according to claim 11,
**characterized by** the joint (4") being placed at the intersection point of the two tilting angles positioned vertically to each other in a way which allows it to function for both adjustment devices (1") together.

13. Device according to claim 12,
**characterized by** the joint (4") being a tumbler bearing.

## Revendications

1. Dispositif de réglage pour le réglage stable et sans jeu d'un dispositif de support de caméra autour d'au moins un axe de basculement, en particulier sur un dispositif destiné à la prise d'images sur plusieurs canaux, dans lequel le dispositif de réglage (1) présente deux plaques reliées entre elles et basculant l'une avec l'autre et où la plaque supérieure supporte, du moins de façon indirecte, une caméra (C) en tant que plaque de support de caméra (2) et où elle est reliée à la plaque inférieure qui remplit la fonction de plaque de base (3)
**qui se caractérise par le fait**
**qu'**un chariot à rampe (5) qui se déplace au sens vertical par rapport à l'axe de basculement et deux rampes à inclinaison contraire (6) sont disposés sur la plaque de base (3),
**qu'**une articulation (4) se trouve entre les deux rampes (6) par laquelle la plaque de support de la caméra (2) est reliée à la plaque de base (3) autour d'un pivot situé à une hauteur constante,
**que** la plaque de support de la caméra (2) présente deux broches de guidage (7) positionnées en laissant un écart entre l'une et l'autre et guidées sur les rampes (6) et où la distance par rapport à la plaque de support de la caméra (2) d'au moins une des broches de guidage (7) peut être réglée avec précision en longueur afin de supprimer le jeu du dispositif, et
**que** le dispositif est conçu de manière à ce que le déplacement du chariot à rampe (5) positionne la plaque de support de la caméra (2) dans un angle de basculement défini (α) par rapport à la plaque de base (3) sans qu'il reste du jeu.

2. Dispositif selon la revendication 1
**qui se caractérise par le fait qu'**au moins une des broches de guidage (7) est dotée d'un blocage de sécurité.

3. Dispositif selon la revendication 1 ou 2
**qui se caractérise par le fait que** les broches de guidage (7) présentent chacune à son extrémité une bille (8) qui se déplace dans les rampes (6).

4. Dispositif selon la revendication 3
**qui se caractérise par le fait que** les rampes (6) sont dotées d'une rainure, en particulier d'une rainure en V, pour le guidage des billes (8).

5. Dispositif selon l'une des revendications 1 à 4
**qui se caractérise par le fait que** le dispositif est constitué de deux dispositifs de réglage (1) disposés verticalement l'un par rapport à l'autre.

6. Dispositif selon la revendication 5
**qui se caractérise par le fait que** l'articulation (4) se trouve au point d'intersection de deux plaques disposées verticalement l'une par rapport à l'autre et dans un angle incliné de telle façon qu'elle fonctionne en même temps pour les deux dispositifs de réglage (1).

7. Dispositif selon la revendication 6
**qui se caractérise par le fait que** l'articulation (4) est un roulement à rotule.

8. Dispositif de réglage pour le réglage stable et sans jeu d'un dispositif de support de caméra autour d'au moins un axe de basculement, en particulier sur un dispositif destiné à la prise d'images sur plusieurs canaux, dans lequel le dispositif de réglage (1") présente deux plaques reliées entre elles et basculant l'une avec l'autre et où la plaque supérieure supporte, du moins de façon indirecte, une caméra (C) en tant que plaque de support de caméra (2") et où elle est reliée à la plaque inférieure qui remplit la fonction de plaque de base (3")
**qui se caractérise par le fait**
**qu'**un chariot à rampe (5") qui se déplace au sens vertical par rapport à l'axe de basculement est disposé sur la plaque de base (3"),
**que** la plaque de support de la caméra (2") est reliée à la plaque de base (3") au moyen d'une articulation (4") autour d'un pivot situé à une hauteur constante, que la plaque de support de la caméra (2") présente une broche de guidage (7") qui
est guidée (8") dans un guidage à coulisse (9") du chariot à rampe (5") et où la distance par rapport à la plaque de support de la caméra (2") de la broche de guidage (7") peut être réglée avec précision en longueur afin de supprimer le jeu du dispositif, et
**que** le dispositif est conçu de manière à ce que le déplacement du chariot à rampe (5") positionne la plaque de support de la caméra (2") dans un angle de basculement défini (α) par rapport à la plaque de base (3") sans qu'il reste du jeu.

9. Dispositif selon la revendication 8
**qui se caractérise par le fait que** la broche de guidage (7") est dotée d'un blocage de sécurité.

10. Dispositif selon la revendication 8 ou 9
**qui se caractérise par le fait que** la broche de guidage (7") présente à son extrémité une bille (8") qui se déplace dans le guidage à coulisse (9").

11. Dispositif selon l'une des revendications 8 à 10
**qui se caractérise par le fait que** le dispositif est constitué de deux dispositifs de réglage (1") disposés verticalement l'un par rapport à l'autre.

12. Dispositif selon la revendication 11
**qui se caractérise par le fait que** l'articulation (4") se trouve au point d'intersection de deux plaques disposées verticalement l'une par rapport à l'autre et dans un angle incliné de telle façon qu'elle fonctionne en même temps pour les deux dispositifs de réglage (1").

13. Dispositif selon la revendication 12
**qui se caractérise par le fait que** l'articulation (4") est un roulement à rotule.
